# EUROPÄISCHE PATENTSCHRIFT

(11) **EP 2 771 660 B1**
(45) Veröffentlichungstag und Bekanntmachung des Hinweises auf die Patenterteilung: **19.12.2018**
(21) Anmeldenummer: 12788430.2
(22) Anmeldetag: 04.07.2012
(51) Int. Cl.: G01L 1/26, G01L 5/04, G01L 5/10

(54) **ZUGKRAFTMESSEINRICHTUNG**
TENSILE FORCE MEASURING DEVICE
DISPOSITIF DE MESURE DE FORCE DE TRACTION

(30) Priorität: 04.07.2011 DE 102011106383
(43) Veröffentlichungstag der Anmeldung: 03.09.2014
(73) Patentinhaber: Honigmann Industrielle Elektronik GmbH, 42289 Wuppertal (DE)
(72) Erfinder: HERHAUS, Jürgen, 42477 Radevormwald (DE)
(74) Vertreter: Lippert Stachow Patentanwälte Rechtsanwälte
(86) Internationale Anmeldenummer: PCT/EP2012/002806
(87) Internationale Veröffentlichungsnummer: WO 2013/004375

(56) Entgegenhaltungen:
- EP-A1- 0 825 426
- EP-A2- 1 783 473
- CH-A5- 692 007
- DE-A1- 3 408 497
- DE-A1- 19 616 194
- DE-A1- 19 924 738
- DE-C1- 3 818 515

## Beschreibung

Die vorliegende Erfindung betrifft eine Vorrichtung zum Messen der Zugkraft eines Langgutes wie eines Seiles, eines Gurtes, eines Bandes oder dergleichen, nach Oberbegriff des Anspruchs 1.

Eine derartige Vorrichtung ist allgemein bekannt.

Sie besteht aus einem Signalgeber, der über eine elektronische Schaltung mit einer Messwertanzeige verbunden ist.

Eingangsseitig ist der Signalgeber mit einem Messwertaufnehmer ausgestattet, der durch die resultierende Kraft des Langgutes, die von einer am Messwertaufnehmer befestigten Umlenkeinrichtung erzeugt wird, beaufschlagt wird.

Die resultierende Kraft ihrerseits wirkt auf einen Kraftnehmer, der durch die Beaufschlagung durch die resultierende Kraft aus seiner Gleichgewichtslage verschoben und in eine neue Gleichgewichtslage verbracht wird.

Der Verschiebeweg ist das Maß für die Erzeugung eines elektrischen Signals, aus dessen Höhe auf die Höhe der resultierenden Kraft geschlossen wird.

Dieses elektrische Signal muss so aufbereitet werden, dass über eine Anzeigeeinrichtung mit zugehöriger Anzeige letztlieh die physikalische Größe der Zugkraft abgelesen werden kann.

Bei derartigen Vorrichtungen zur Messung der Zugkraft von Langgut wird, um reproduzierbare Messergebnisse zu erzielen, das Langgut einer vordefinierten Umlenkung unterworfen, sodass die Umlenkwege und Umlenkwinkel des Langgutes stets für alle Messungen gleich sind.

Dabei kommt es insbesondere auf einen für alle Messaufgaben im Wesentlichen gleich großen Umschlingungswinkel an, der natürlich für Langgut unterschiedlicher Materialien und Abmessungen möglichst beizubehalten ist.

Bei derartigen Messaufgaben ist oftmals die Stelle in einer Verarbeitungslinie des Langguts, wo die Zugkraft zu erfassen ist, schwer zugänglich.

Oftmals müssen die Messungen auch unter örtlich schwierigen oder gefahrträchtigen Bedingungen durchgeführt werden, wobei die jeweilige Messgröße dann von einem Display abzulesen wäre. Beispiele hierfür sind z. B. hohe Liniengeschwindigkeiten, rutschige Böden, gefährlich hohe Temperaturen, heiße Luftströme, schwache Beleuchtung oder ähnliche Bedingungen. Andererseits kann der Verarbeitungsprozess auch störempfindlich sein oder das Langgut bruch- oder reißempfindlich.

Derartige Vorrichtungen zum Messen der Zugkraft des Langguts verfügen zu diesem Zweck über fest am Signalgeber angebrachte, z. T. auch schwenkbare Anzeigevorrichtungen, die allerdings aus technischen Gründen kein in alle Richtungen schwenkbares oder verstellbares Display enthalten können.

Weiterhin benötigt eine gut und aus unterschiedlichen Richtungen ablesbare Anzeige relativ viel Platz, woraus sich weiteres Gefahrenpotential ergeben kann.

Die CH 692 007 A5 betrifft einen Fadenspannungssensor, bei welchem der unter Spannung stehende Faden an einem Umlenkungspunkt umgelenkt und die am Umlenkungspunkt auftretende Kraft in eine Kraftmesseinrichtung eingeleitet und in Abhängigkeit der gemessenen Kraft in einer Messelektronik ein Messsignal erzeugt wird. Die Offenlegungsschrift DE 199 24 738 A1 betrifft eine Messzelle zur Messung von Kräften mittels ortsfest gelagertem Hebel zur Einleitung der Messlast, wobei der Hebel an einer flächigen Membran fest angebracht ist, die an ihrem Umfang in einem zum Maschinengestell ortsfest gelagertem Gehäuse sitzt. Da die Messzelle hermetisch gegenüber der Umgebung abgeriegelt ist, kann vorgesehen sein, die Messwerte über eine drahtlose Funkverbindung aus dem Innenraum der Messzelle nach außen zu führen.

Die Offenlegungsschrift EP 1 783 473 A2 betrifft eine Anordnung zum Erfassen und zur Kontrolle der Zugspannung eines Bandes wie eines Zurrgurtes, die ausgebildet ist, bei einer gegenüber einem Einstellvorgang abweichenden Zugspannung des Bandes einen Schaltvorgang auszulösen. Dabei ist eine getrennt von der Messanordnung ausgebildetes und angeordnetes Anzeigegerät über Leitungen oder eine Funkverbindung mit diesem verbunden zur Anzeige und Auslösung von Alarmmeldungen. Die Offenlegungsschrift DE 196 16 194 A1 betrifft eine Vorrichtung zum Messen der mechanischen Spannung eines Riemens in gespanntem Zustand, umfassend eine Schwingungsdetektiereinrichtung, beispielsweise ein Mikrofon oder ein Beschleunigungssensor zum Detektieren einer Schwingung des Riemens, wobei die Schwingung durch Aufbringen von Schwingungsanregungsenergie auf den Riemen angeregt wird, umfassend ferner eine Anpassungseinrichtung in Form einer Schwingungsfrequenz-Recheneinrichtung zum Bestimmen einer Schwingungsfrequenz sowie eine Prüfeinrichtung in Form einer Informationsverarbeitungs-/Anzeigeeinrichtung zum rechnerischen Bestimmen einer Spannung des Riemens auf der Basis der ermittelten Schwingungsfrequenz und von Information über den zu messenden Riemen.

Es ist daher Aufgabe der vorliegenden Erfindung, die bekannte Vorrichtung zum Messen der Zugkraft von Langgut so weiter zu bilden, dass sie flexibel einsetzbar ist und dass der Nutzer während der Messung außerhalb jeglicher Gefährdung ist und trotzdem die ermittelte Größe auf einfache Weise zum Ablesen aufbereitet werden kann.

Diese Aufgabe löst die Erfindung mit den Merkmalen des Hauptanspruchs.

Aus der Erfindung ergibt sich der Vorteil, dass sich der Benutzer voll auf seine Messaufgabe konzentrieren kann, ohne in Gefahr zu geraten, zum Ablesen des Messergebnisses in die Verarbeitungslinie zu gelangen.

Dieser Vorteil wird dadurch erreicht, dass die Vorrichtung als mobiles Messgerät mit benutzerseitig mobil verwendbarem und mit einem Handgriff ausgebildeten Signalgeber mit zum Signalgeber mobil verwendbarer Anzeigeeinrichtung ausgebildet ist , dass der Signalgeber ein 3-Rollen-Signalgeber ist und dass von dem Messwertaufnehmer ausgehend bis zur Anzeigevorrichtung eine Signalübertragungsstrecke vorgesehen ist, bei der alle Signalleitungen, die der Gefahr des Verfangens im Langgut unterliegen, innerhalb des geschlossen ausgebildeten Gehäuses des Signalgebers verlaufend unter Verschluss gehalten sind, und wobei der Abschnitt der Signalübertragungsstrecke zwischen Signalgeber und Anzeigevorrichtung über eine Sendevorrichtung am Signalgeber und eine zugeordnete Empfangsvorrichtung der Anzeigevorrichtung drahtlos ist.

Trotzdem stellt die Erfindung ein kompaktes und sehr handliches Messgerät zur Verfügung, welches aus zwei voneinander gelösten Komponenten besteht.

Es kommt also bei der vorliegenden Erfindung darauf an, die der Messung zugrunde liegende Zugkraft im Langgut, die als resultierende Kraft an einer teilumschlungenen Umlenkeinrichtung angreift, einerseits über von außen nicht zugängliche Signalleitungen bis zu einer Sendevorrichtung, die Bestandteil des Signalgebers ist, zu leiten und von dort aus drahtlos bis zu einer Empfangsvorrichtung an der Anzeigevorrichtung.

Dabei wird im Grunde der Signalgeber zu einem F/D-Wandler, der drahtlos ein digitales Signal an die Empfangsvorrichtung der Anzeigevorrichtung übermittelt.

Der besondere Vorteil liegt darin, dass die Anzeigevorrichtung entweder irgendwo ortsfest und gut ablesbar fixiert oder ebenso als mobile Komponente einer weiteren Benutzerperson zum Ablesen gegeben werden kann.

Dieser Vorteil wird dadurch erreicht, dass eine örtliche Trennung des Signalgebers, welcher die gesamte Messmechanik und die Elektronik bis zur Erzeugung des Anzeigesignals enthält, von der Elektronik erfolgt, welche letztlich das anzuzeigende Signal auf einem Display ausgibt.

Damit unterscheidet sich die vorliegende Erfindung ganz erheblich von aus dem Stand der Technik bekannten Messgeräten, bei denen die Anzeigeeinheit vom Messgerät separiert wird, weil im hier vorliegenden Fall der Zugkraftmesseinrichtung die physikalische Größe eine Kraft ist, die unmittelbar an einer Stelle des Signalgebers erfasst wird, indem sie auf den Messwertaufnehmer, der Bestandteil des Signalgebers ist, einwirkt.

Der Messwertaufnehmer selbst ist ein mechanisches Bauteil, welches mechanisch in den Signalgeber integriert ist, und nicht, wie im Falle von z. B. Digitalmultimetern, über Messschnüre mit dem Messgerät zu verbinden ist, bevor überhaupt ein Signal erzeugt werden kann.

Dem F/D-Wandler mit drahtloser Übermittlung kommt daher im Umfang der vorliegenden Erfindung besondere Bedeutung zu.

Der F/D-Wandler kann als kompakte Komponente der gesamten Messvorrichtung so ausgestaltet werden, dass trotz einer örtlich verschiedenen Anordnung der Anzeigevorrichtung eine praktisch völlig gefährdungsfreie und innerhalb eines Gehäuses des F/D-Wandlers trotzdem drahtgebundene Übermittlung des Messwertes von dem Messwertaufnehmer zur Auswerteelektronik ermöglicht ist.

Die Erfindung bietet darüber hinaus den Vorteil, dass der Anwender sich ausschließlich auf das Abgreifen der zu messenden Größe, nämlich der Zugspannung im Langgut, konzentrieren kann.

Dieser Vorteil wird umso schwerer wiegen, je diffiziler das Abgreifen der Messgröße ist.

Insbesondere bei Messungen an Langgut aus dem Bereich der Papierindustrie, welches mit sehr hohen Geschwindigkeiten läuft, besteht dank der Erfindung nicht mehr die Gefahr, dass sich die Messvorrichtung in der laufenden Papierbahn verfangen kann und ggf. den Benutzer mitreißt.

Die Arbeits- und Betriebssicherheit einer derartigen Kraftmesseinrichtung wird daher in Folge der Erfindung erheblich verbessert, wobei sogar eine Ein-Mann-Bedienung mit lediglich einer einzigen Hand möglich ist.

Der Benutzer kann die Anzeigevorrichtung mit dem zugeordneten Display ohne weiteres auch selbst ablesen, falls er die Anzeigevorrichtung entsprechend ablesegünstig platzieren kann und er kann trotzdem auch bei schlecht zugänglichen Messpunkten einen sicheren Stand erhalten.

Aus den Merkmalen des Anspruchs 2 ergibt sich eine Weiterbildung, bei welcher letztlich außer den Rollen einer vollständigen Umlenkeinrichtung und einem Handgriff keinerlei Gegenstände vorhanden sind, bei denen die Gefahr eines Verfangens im laufenden Langgut besteht.

Dieser Vorteil wird dadurch erreicht, dass der Signalgeber bis auf die notwendige Umlenkeinrichtung ein vollständig geschlossenes Gehäuse aufweist, bei welchem auch zwischen der Messstelle und der nachgeordneten Auswerteelektronik keinerlei frei zugängliche Kabelverbindungen existieren.

Die drahtlose Signalübertragungsstrecke kann als Funkverbindung oder optische Verbindung ausgestaltet sein.

Vorteilhafterweise wird die Anzeigeeinrichtung unmittelbar am Signalgeber befestigt und wird dann gegebenenfalls gelöst, um die Messwerte räumlich getrennt vom Signalgeber anzeigen zu können.

Dies kann mit einer Anzeigeeinrichtung erfolgen, die über einen Gurt, ein Klettband, einen Haltemagneten oder dergleichen verfügt, mit dessen Hilfe die Anzeigeeinrichtung zur Anbringung an einem Arm, einer Wand, einem Metallgehäuse oder aber auch zur Aufstellung auf einem Tisch vorgesehen ist.

Weiterhin bietet die Erfindung den Vorteil, dass die Anzeigevorrichtung auch zur Kommunikation mit unterschiedlichen Signalgebern individuell adressierbar ist, sodass auch eine Parallelabfrage oder eine Reihumabfrage möglich ist.

Für diesen Fall würde man ein und dieselbe Anzeigevorrichtung ohne weiteres auch für mehrere Signalgeber einsetzen können, wobei sich die vom jeweiligen Signalgeber ausgehenden Signale durch individuelle Adressierbarkeit nicht gegenseitig stören.

Weiterhin kann die Signalübertragungsstrecke auch bidirektional betreibbar sein. Diese Option ist insbesondere sinnvoll für Fälle, in denen ein Signalgeber kalibriert oder programmiert werden muss oder soll.

Ferner kann es auch Sinn machen, die Anzeigevorrichtung mit einem Messwertspeicher auszustatten, um die während eines Messzyklus erfassten Werte nach Abschluss extern auswerten zu können.

Dies kann über externe Hardware geschehen, die über übliche Datenleitungen mit der Anzeigeeinrichtung verbunden werden können.

Weiterhin lässt sich sowohl die Anzeigeeinrichtung als auch der Signalgeber über eine entsprechende IP-Adresse mit dem Internet verbinden, sodass auch eine Fernabfrage möglich ist.

Im letzteren Fall würde die Anzeigeeinrichtung z. B. von einem anderenorts stehenden Laptopbildschirm bereitgestellt.

Von besonderem Vorteil allerdings ist auch eine Weiterbildung, bei welcher für jeweils mehrere Sensoren lediglich eine einzige Anzeigevorrichtung vorgesehen ist.

Diese Maßname bietet den Vorteil geringer Kosten zusammen mit der Möglichkeit, Zugkräfte einer Verarbeitungslinie auch an unterschiedlichen Stellen parallel oder reihum erfassen zu können.

Im Folgenden wird die Erfindung anhand von Ausführungsbeispielen erläutert.

Es zeigen:
- Fig. 1: ein erstes Ausführungsbeispiel der Erfindung
- Fig. 2: die Darstellung gem. Fig. 1 als schematische Ansicht
- Fig. 3: ein praktisches Beispiel zur Anwendung der Erfindung mit einem 3-Rollen-Signalgeber
- Fig. 4: eine Messung am laufenden Langgut unter erschwerten Bedingungen
- Fig. 5 Fig. 6 Fig. 7: unterschiedliche Möglichkeiten der Anordnung der Anzeigeeinrichtung

Sofern im Folgenden nichts anderes gesagt ist, gilt die folgende Beschreibung stets für alle Figuren.
Die Figuren zeigen eine Vorrichtung zum Messen der Zugkraft eines Langgutes.
Bei dem Langgut handelt es sich z. B. um ein Seil, einen Gurt oder ein Band.
Das Langgut kann stationär angeordnet werden, wie z. B. ein statisches Stahlseil zur Stabilisierung einer Konstruktion oder in einem Produktionsprozess laufen, wie z. B. eine Papierbahn in der Papierindustrie.
Eine derartige Vorrichtung weist einen Signalgeber 1 auf.
Der Signalgeber 1 ist eingangsseitig mit einem Messwertaufnehmer 2 versehen, der eine Umlenkeinrichtung 3 für das Langgut trägt.
Die Umlenkeinrichtung dient der Umlenkung des Langguts so, dass in Folge der Umlenkung eine Kraft R entsteht, die mit ihrer in Richtung der strichpunktartig gezeichneten Messachse fallenden Komponente Fᵣₑₛ auf den Messwertaufnehmer 2 wirkt.
Die Umlenkeinrichtung 3 wird also von dem Langgut zwecks der Messung teilumschlungen und wirkt ihrerseits mit der in Messrichtung fallenden Komponente von R auf einen Kraftnehmer 4.

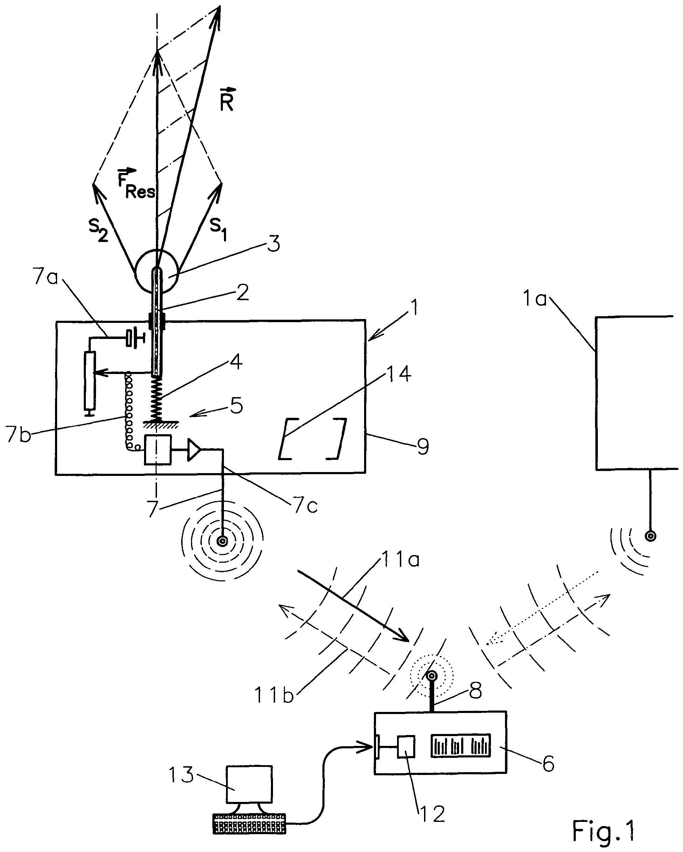

Hierzu zeigt Fig. 1, dass als Kraftnehmer 4 eine Feder vorgesehen ist, deren Federkraft der aus den Teilumschlingung resultierenden Kraft Fᵣₑₛ das Gleichgewicht hält. Die resultierende Kraft ergibt sich, wie aus Fig. 1 ersichtlich, aus den in Folge der Umschlingung am Langgut entstehenden Kräften S1 und S2 durch vektorielle Addition.

Aus der Verlagerung des Kraftnehmers 4 lässt sich über eine elektronische Schaltung 5 ein der Höhe der resultierenden Kraft Fᵣₑₛ entsprechendes elektrisches Signal erzeugen, welches über die elektronische Schaltung 5 zu einem Anzeigesignal für die Anzeigeeinrichtung 6 umgewandelt wird.

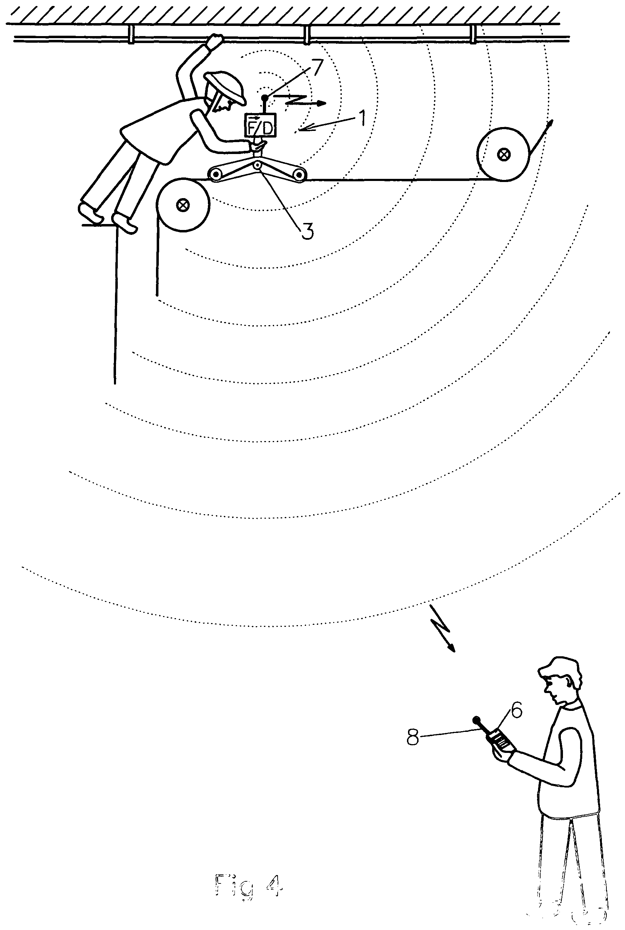

Wesentlich ist, dass, ausgehend von dem Messwertaufnehmer 2 bis zur Anzeigeeinrichtung 6 alle Signalleitungen, die hier vereinfachend mit 7a, 7b und 7c dargestellt sind, unter Verschluss gehalten werden, sodass sie sich nicht im Langgut, insbesondere auch nicht im laufenden Langgut entsprechend Fig. 4 verfangen können.

Weiterhin ist wesentlich, dass neben dieser gegen die Gefahr des Verfangens geschützten Signalübertragungsstrecke zusätzlich auch eine drahtlose Signalübertragungsstrecke vorgesehen ist, die sich zwischen einem Signalgeber 1 und der Anzeigevorrichtung 6 erstreckt.

Hierzu sind am Signalgeber 1 eine Sendevorrichtung 7 und an der Anzeigevorrichtung 6 eine zugeordnete Empfangsvorrichtung 8 vorgesehen.

Sende- und Empfangsvorrichtung kommunizieren erfindungswesentlich drahtlos.

Wie weiterhin die Figuren zeigen, handelt es sich bei dieser Vorrichtung insgesamt um einen F/D-Wandler, bei welchem das Eingangssignal, nämlich die resultierende Kraft Fres, die sich aus den Langgutkräften S1 und S2 durch vektorielle Addition ergibt, umgewandelt wird in ein Digitalsignal D, welches dann über die Sendevorrichtung 7 zur Empfangsvorrichtung 8 übermittelt wird.

Weiterhin zeigt insbesondere Fig. 1, dass sämtliche Signalleitungen 7a, 7b, 7c die zur Umwandlung der physikalischen Eingangsgröße Kraft F in eine digitale elektronische Ausgangsgröße D notwendig sind, ausschließlich innerhalb des geschlossenen Gehäuses 9 verlaufen, das Bestandteil des Signalgebers 1 ist.

Die Signalübertragungsstrecke kann, wie insbesondere die Figuren zeigen, eine Funkverbindung sein oder über optische Übertragungswellen funktionieren.

Hierzu bieten sich insbesondere die Arbeitsweisen nach 2400 bis 2483,5 MHZ ISM bzw. SRD-Standards an oder Bluetoothregistered bzw. optische Verfahren über IrDA-registeredtransceiver.

Bevorzugt ist eine Ausführungsform, bei welcher das Gehäuse 9 des Signalgebers einen Halter 14 aufweist, an welchem die Anzeigevorrichtung 6 außerhalb des Gebrauchs befestigt werden kann. Auf diese Weise bleiben Signalgeber und Anzeigevorrichtung 6 stets zusammen, solange sie nicht im Gebrauch sind und können einfach voneinander getrennt werden.

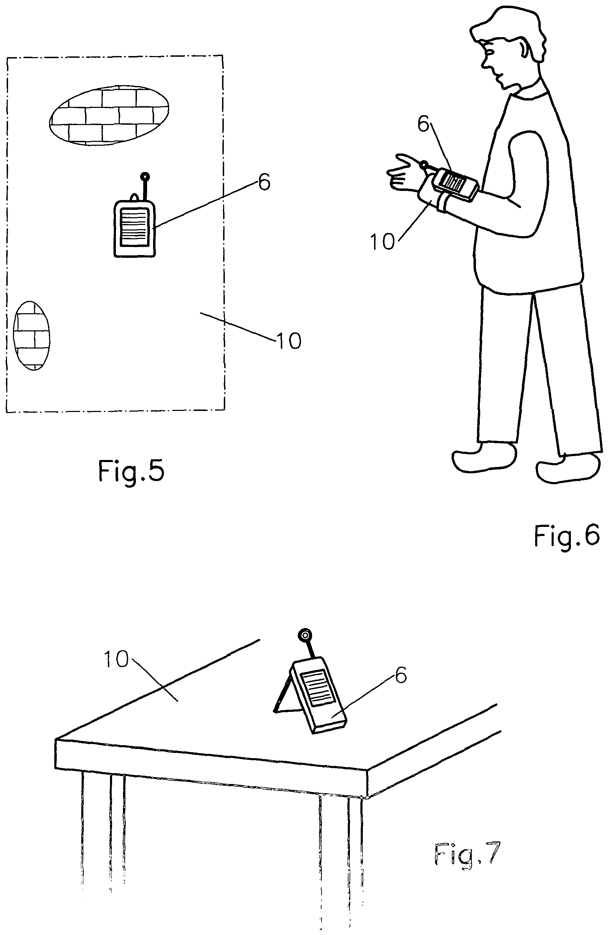

Insbesondere zeigen zu diesem Zweck die Fig. 5 bis 7 Anzeigeeinrichtungen 6, die über Befestigungsmittel 10 verfügen, mit deren Hilfe sie z. B. an einem Arm (s. Fig. 6), einer Wand (s. Fig. 5), einem Metallgehäuse (s. Fig. 5) anzubringen wären oder z. B. über einen entsprechenden Aufsteller (s. Fig. 7) zur Aufstellung auf einem Tisch vorgesehen sind.

Weiterhin zeigt Fig. 1 ein Ausführungsbeispiel, bei welchem ein und dieselbe Anzeigevorrichtung 6 unterschiedlichen Signalgebern 1 und 1a zugeordnet ist und zu diesem Zweck auch individuell adressiert werden kann.

Insbesondere zeigt Fig. 1 auch ein Ausführungsbeispiel, bei welchem die drahtlose Signalübertragungsstrecke sowohl von der Sendevorrichtung 7 zur Empfangsvorrichtung 8 als auch in umgekehrter Richtung, also bidirektional betreibbar ist.

Die Signalübertragungsrichtung 11a, 11b ermöglicht eine Option, bei welcher die Anzeigevorrichtung 6 auch mit dem Signalgeber 1 kommunizieren kann, um z. B. eine Kalibrierung oder eine Programmierung oder dergleichen durchführen zu können.

Bei der Anzeigvorrichtung 6 gem. Fig. 1 ist zusätzlich auch ein Messwertspeicher 12 vorgesehen, in welchem die während einer Messung gewonnenen Messwerte abzuspeichern sind, um gegebenenfalls über externe Hardware 13 einer weiteren Auswertung unterzogen werden zu können.

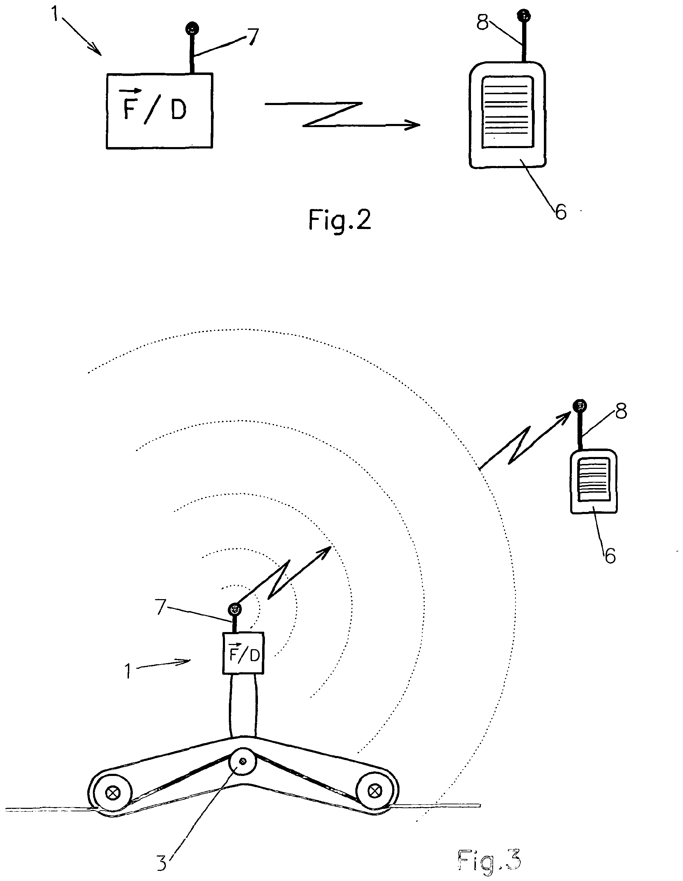

Ergänzend hierzu zeigt Fig. 2 eine schematische Darstellung der Erfindung. Hier ist lediglich ein F/D-Wandler gezeigt, der über einen entsprechende Drahtlosverbindung mit der Anzeigevorrichtung 6 so kommuniziert, dass die von dem F/D-Wandler aufgenommenen Messwerte nach ihrer Umwandlung in ein Digitalsignal auf dem Display der Anzeigevorrichtung 6 ausgewiesen werden können.

Im Hinblick auf die hier vorliegende Messaufgabe einer möglichst reproduzierbaren Messung der Zugkraft im Langgut zeigt ergänzend Fig. 3 eine mögliche Ausführungsform, bei welcher das Langgut über die Umlenkeinrichtung 3 geführt wird.

Dabei erfährt das Langgut an der mittleren Rolle, welche die Umlenkeinrichtung 3 darstellt, einen genau definierten Umschlingungswinkel, da die beiden rechts und links angeordneten Umlenkrollen des Signalgebers 1 ortsfest sind.

Eine derartige Anordnung der Umlenkrollen bietet insbesondere Vorteile deshalb, da die Einlauf-, Umlenk- und Auslaufbedingungen für das Langgut stets übereinstimmen und auf diese Weise ein stets vergleichbares Messergebnis geliefert wird.

Fig. 4 zeigt darüber hinaus die Anwendung der Erfindung bei einer Messsituation mit schwer zugänglicher Messstelle.

Der Benutzer des Signalgebers 1 zeigt hier schematisch, dass die Messstelle nicht ohne weiteres zugänglich ist.

Handelt es sich, wie hier, um ein laufendes Band, dessen Zugspannung erfasst werden muss, kann sich der Benutzer voll auf die Erfassung der Messgröße konzentrieren und muss nicht zusätzlich irgendwelche Verrenkungen machen, um das betreffende Display ablesen zu können.

Das Display befindet sich in der Hand der Hilfsperson, welche auf dem Hallenboden sicher steht und die Anzeigevorrichtung in der Hand hält.

Der Datenaustausch erfolgt erfindungswesentlich ausschließlich über drahtlose Kommunikation, während die Messwerterfassung und entsprechende Aufbereitung bis zum digitalen Ausgangssignal der Sendevorrichtung durch eine Verkabelung erfolgt, die ausschließlich innerhalb des Gehäuses 9 des Signalgebers 1 vorgesehen ist.

Von wesentlicher Bedeutung für die Erfindung ist ein mobiles Messgerät zur Zugkraftmessung mit der Möglichkeit zur räumlichen Trennung des F/D-Wandlers mit dessen Umlenkeinrichtung und der Anzeigevorrichtung, wobei zusätzlich die Anzeigevorrichtung auch durch externe Hardware realisierbar ist, die auch außer Haus angeordnet sein kann.

### Bezugszeichenliste

- 1: Signalgeber
- la: Signalgeber
- 2: Messwertaufnehmer
- 3: Umlenkeinrichtung
- 4: Kraftnehmer
- 5: Elektronische Schaltung
- 6: Anzeigevorrichtung
- 7: Sendevorrichtung
- 7a 7b 7c: Signalleitungen
- 8: Empfangsvorrichtung
- 9: Gehäuse
- 10: Befestigungsmittel
- 11a 11b: Signalübertragungsrichtung
- 12: Messwertspeicher
- 13: externe Hardware
- 14: Halter

## Patentansprüche

1. Vorrichtung zum Messen der Zugkraft eines Langgutes mit einem, ein Gehäuse (9) aufweisender Signalgeber (1), der eingangsseitig einen Messwertaufnehmer (2) mit einer Umlenkeinrichtung (3) für das Langgut aufweist, wobei die Umlenkeinrichtung (3) von dem Langgut zwecks der Messung teilumschlungen wird und über den Messwertaufnehmer auf einen Kraftnehmer (4) wirkt, der so durch die vom Langgut auf die Umlenkeinrichtung (3) ausgeübte resultierende Kraft Fᵣₑₛ beaufschlagt wird, wobei eine elektronische Schaltung (5) ein der Höhe der resultierenden Kraft Fᵣₑₛ entsprechendes elektrisches Signal erzeugt und in ein Anzeigesignal für eine Anzeigeeinrichtung umwandelt, **dadurch gekennzeichnet, dass** die Vorrichtung als mobiles Messgerät mit benutzerseitig mobil verwendbarem und mit einem Handgriff ausgebildeten Signalgeber (1) mit zum Signalgeber (1) mobil verwendbarer Anzeigeeinrichtung (6) ausgebildet ist, dass der Signalgeber ein 3-Rollen-Signalgeber ist und dass von dem Messwertaufnehmer (2) ausgehend bis zur Anzeigevorrichtung (6) eine Signalübertragungsstrecke vorgesehen ist, bei der alle Signalleitungen (7a, 7b, 7c), die der Gefahr des Verfangens im Langgut unterliegen, innerhalb des geschlossen ausgebildeten Gehäuses (9) des Signalgebers (1) verlaufend unter Verschluss gehalten sind, und wobei der Abschnitt der Signalübertragungsstrecke zwischen Signalgeber (1) und Anzeigevorrichtung (6) über eine Sendevorrichtung (7) am Signalgeber (1) und eine zugeordnete Empfangsvorrichtung (8) der Anzeigevorrichtung (6) drahtlos ist.

2. Vorrichtung zum Messen der Zugkraft eines Langgutes nach Anspruch 1 , **dadurch gekennzeichnet, dass** der Signalgeber (1) ein F/D-Wandler ist, der einen aufgenommenen Kraftwert (F) in ein Digitalsignal (D) umwandelt und drahtlos das Digitalsignal an die Empfangsvorrichtung der Anzeigevorrichtung übermittelt.

3. Vorrichtung zum Messen der Zugkraft eines Langgutes nach einem der Ansprüche 1 bis 2, **dadurch gekennzeichnet, dass** die drahtlose Signalübertragungsstrecke eine Funkverbindung ist.

4. Vorrichtung zum Messen der Zugkraft eines Langgutes nach einem der Ansprüche 1 bis 2, **dadurch gekennzeichnet, dass** die drahtlose Signalübertragungsstrecke als optische, über optische Übertragungswellen funktionierende Verbindung zwischen Sendevorrichtung (7) und Anzeigevorrichtung (6) ausgebildet ist.

5. Vorrichtung zum Messen der Zugkraft eines Langgutes nach einem der Ansprüche 1 bis 4, **dadurch gekennzeichnet, dass** die Anzeigeeinrichtung (6) im Sinne einer Anbringung lösbar mit dem Signalgeber (1) verbindbar ist.

6. Vorrichtung zum Messen der Zugkraft eines Langgutes nach einem der Ansprüche 1 bis 5, **dadurch gekennzeichnet, dass** die Anzeigeeinrichtung (6) über Befestigungsmittel (10) zur Anbringung an einem Körper verfügt.

7. Vorrichtung zum Messen der Zugkraft eines Langgutes nach einem der Ansprüche 1 bis 6, **dadurch gekennzeichnet, dass** die Anzeigevorrichtung (6) zwecks Kommunikation mit unterschiedlichen Signalgebern (1, 1a) individuell adressierbar ist.

8. Vorrichtung zum Messen der Zugkraft eines Langgutes nach einem der Ansprüche 1 bis 7, **dadurch gekennzeichnet, dass** die drahtlose Signalübertragungsstrecke bidirektional (11a, 11b) betreibbar ist.

9. Vorrichtung zum Messen der Zugkraft eines Langgutes nach einem der Ansprüche 1 bis 8, **dadurch gekennzeichnet, dass** ein Messwertspeicher (12) vorgesehen ist.

10. Vorrichtung zum Messen der Zugkraft eines Langgutes nach einem der Ansprüche 1 bis 9, **dadurch gekennzeichnet, dass** das Signal der Sendevorrichtung (7) über externe Hardware (13) auslesbar ist.

## Claims

1. Device for measuring the tensile force of a long good with a signal generator (1) with a housing that has, on the input side, a transducer (2) with a deflecting device (3) for the long good, wherein the deflecting device (3) is partially looped around by the long good for the purpose of measurement and acts via the transducer onto a force sensor (4) that is thus impacted by the resulting force Fᵣₑₛ exerted by the long good onto the deflecting device (3), wherein an electronic circuit (5) generates an electrical signal corresponding to the level of the resulting force Fᵣₑₛ and converts it into a display signal for a display device, **characterized in that** the device is configured as a mobile measuring instrument with a signal generator (1) usable as a mobile device on the user side and designed with a handgrip with a display device (6) usable as a mobile device with respect to the signal generator (1), that the signal generator is a signal generator with 3 rollers and that a signal transmitting link is provided starting from the transducer (2) to the display device (6), signal transmitting link for which all the signal lines (71, 7b, 7c) that are subject to the risk of getting tangled up in the long good are locked inside the closed housing (9) of the signal generator (1) and wherein the portion of the signal transmitting link between the signal generator (1) and the display device (6) is wireless over an emitting device (7) on the signal generator (1) and an associated receiving device (8) of the display device (6).

2. Device for measuring the tensile force of a long good according to claim 1, **characterized in that** the signal generator (1) is a F/D converter that converts a recorded force value (F) into a digital signal (D) and wireless transmits the digital signal to the receiving device of the display device.

3. Device for measuring the tensile force of a long good according to one of the claims 1 to 2, **characterized in that** the wireless signal transmitting link is a radio link.

4. Device for measuring the tensile force of a long good according to one of the claims 1 to 2, **characterized in that** the wireless signal transmitting link is configured as an optical link working via optical transmission waves between the emitting device (7) and the display device (6).

5. Device for measuring the tensile force of a long good according to one of the claims 1 to 4, **characterized in that** the display device (6) can be removably connected to the signal generator (1) in the sense of an attachment.

6. Device for measuring the tensile force of a long good according to one of the claims 1 to 5, **characterized in that** the display device (6) features attachment means (10) for the attachment to a body

7. Device for measuring the tensile force of a long good according to one of the claims 1 to 6, **characterized in that** the display device (6) is individually addressable for the purpose of communication with different signal generators (1, 1a).

8. Device for measuring the tensile force of a long good according to one of the claims 1 to 7, **characterized in that** the wireless signal transmitting link can be operated bidirectionally (11a, 11b).

9. Device for measuring the tensile force of a long good according to one of the claims 1 to 8, **characterized in that** a measured value memory (12) is provided.

10. Device for measuring the tensile force of a long good according to one of the claims 1 to 9, **characterized in that** the signal of the emitting device (7) is readable by external hardware (13).

## Revendications

1. Dispositif pour mesurer la force de traction d'une marchandise longue avec un générateur de signaux (1) présentant un boîtier (9), qui présente, côté entrée, un capteur de valeurs de mesure (2) avec un dispositif de renvoi (3) pour la marchandise longue, cependant que le dispositif de renvoi (3) est partiellement enroulé par la marchandise longue pour la mesure et agit par le capteur de valeurs de mesure sur un capteur de force (4) qui est ainsi sollicité par la force résultante Fᵣₑₛ exercée par la marchandise longue sur le dispositif de renvoi (3), cependant qu'un circuit électronique (5) produit un signal électrique qui correspond au niveau de la force résultante Fᵣₑₛ et le transforme en un signal d'affichage pour un dispositif d'affichage, **caractérisé en ce que** le dispositif est configuré comme un appareil de mesure mobile avec un générateur de signaux (1) pouvant être utilisé de manière mobile par un utilisateur et configuré avec une poignée avec un dispositif d'affichage (6) qui peut être utilisé de manière mobile par rapport au générateur de signaux (1), que le générateur de signaux est un générateur de signaux à trois rouleaux et qu'il est prévu une liaison de transmission des signaux qui part du capteur de valeurs de mesure (2) jusqu'au dispositif d'affichage (6), liaison de transmission pour laquelle toutes les lignes de signaux (7a, 7b, 7c) qui sont sujettes au risque d'enchevêtrement dans la marchandise longue sont maintenues sécurisées à l'intérieur du boîtier (9) configuré fermé du générateur de signaux (1) et cependant que le tronçon de la liaison de transmission de signaux entre le générateur de signaux (1) et le dispositif d'affichage (6) passant par un dispositif d'émission (7) sur le générateur de signaux (1) et un dispositif récepteur associé (9) du dispositif d'affichage (6) est sans fil.

2. Dispositif pour mesurer la force de traction d'une marchandise longue selon la revendication 1, **caractérisé en ce que** le générateur de signaux (1) est un convertisseur de force en signal numérique qui transforme une valeur de force enregistrée (F) en un signal numérique (D) et qui transmet sans fil le signal numérique au dispositif récepteur du dispositif d'affichage.

3. Dispositif pour mesurer la force de traction d'une marchandise longue selon l'une des revendications 1 à 2, **caractérisé en ce que** la liaison de transmission de signal sans fil est une liaison radio.

4. Dispositif pour mesurer la force de traction d'une marchandise longue selon l'une des revendications 1 à 2, **caractérisé en ce que** la liaison de transmission de signal sans fil est configurée comme une liaison optique qui fonctionne par des ondes de transmission optiques entre le dispositif d'émission (7) et le dispositif d'affichage (6).

5. Dispositif pour mesurer la force de traction d'une marchandise longue selon l'une des revendications 1 à 4, **caractérisé en ce que** le dispositif d'affichage (6) peut être relié de manière amovible au générateur de signaux (1) dans le sens d'une fixation.

6. Dispositif pour mesurer la force de traction d'une marchandise longue selon l'une des revendications 1 à 5, **caractérisé en ce que** le dispositif d'affichage (6) dispose de moyens de fixation (10) pour la fixation à un corps.

7. Dispositif pour mesurer la force de traction d'une marchandise longue selon l'une des revendications 1 à 6, **caractérisé en ce que** le dispositif d'affichage (6) peut être adressé individuellement pour la communication avec différents générateurs de signaux (1, 1a).

8. Dispositif pour mesurer la force de traction d'une marchandise longue selon l'une des revendications 1 à 7, **caractérisé en ce que** la liaison de transmission de signal sans fil est exploitable dans les deux sens (11a, 11b).

9. Dispositif pour mesurer la force de traction d'une marchandise longue selon l'une des revendications 1 à 8, **caractérisé en ce qu'**il est prévu une mémoire de valeurs mesurées (12).

10. Dispositif pour mesurer la force de traction d'une marchandise longue selon l'une des revendications 1 à 9, **caractérisé en ce que** le signal du dispositif d'émission (7) peut être lu par un équipement informatique externe.
